# EUROPEAN PATENT APPLICATION

(11) **EP 4 741 194 A1**
(43) Date of publication of application: **13.05.2026**
(21) Application number: 25209346.3
(22) Date of filing: 17.10.2025
(51) Int. Cl.: B60K 1/00, B60K 5/00

(54) **SUPPORT STRUCTURE OF DRIVING DEVICE**

(30) Priority: 07.11.2024 JP 2024194932
(71) Applicant: Suzuki Motor Corporation, Shizuoka 432-8611 (JP)
(72) Inventor: HAYASHI, Tsubasa, HAMAMATSU-SHI, 432-8611 (JP); NAKABAYASHI, Nobuo, HAMAMATSU-SHI, 432-8611 (JP); HATTORI, Soichiro, HAMAMATSU-SHI, 432-8611 (JP); EGUCHI, Hiroyuki, HAMAMATSU-SHI, 432-8611 (JP); MIYATA, Keisuke, HAMAMATSU-SHI, 432-8611 (JP); SATO, Tatsuki, HAMAMATSU-SHI, 432-8611 (JP); IMAI, Kyohei, HAMAMATSU-SHI, 432-8611 (JP)
(74) Representative: Plasseraud IP

(57) **Abstract**

[Problem to be Solved] To provide a support structure of a driving device that can protect a wire harness (31) from an impact during a rear-end collision of a vehicle (1).

[Solution]

The support structure of a driving device (5) has the wire harness (31) that is connected to a connector (30) of the driving device (5), the wire harness (31) has a front side harness portion (31A) that extends from a position more forward than the driving device (5) toward the driving device (5), and a bending portion (31B) that bends from a rear end portion (31a) of the front side harness portion (31A) toward the driving device (5) and extends in a vehicle width direction, with a connector (32) provided at a rear end portion being connected to the connector (30), and the bending portion (31B) is disposed more rearward than the connector (30). In a mount bracket (17), a rear end portion (17a) is disposed to be positioned more rearward than the connector (30), and the bending portion (31B) is disposed above the mount bracket (17) and more forward than the rear end portion (17a) of the mount bracket (17).

## Description

### [Technical Field]

The present invention relates to a support structure of a driving device.

### [Background Art]

Conventionally, there has been known a vehicle body structure in which a driving device that transmits rotational power outputted from a motor to rear wheels is disposed in a rear portion of a vehicle (see Patent Literature 1).

In this vehicle body structure, a battery is disposed in front of the driving device, and the battery and the driving device are connected by a high-voltage cable.

### [Citation List]

### [Patent Literature]

[Patent Literature 1] Japanese Patent No. 7413078

### [Summary of Invention]

### [Technical Problem]

However, the conventional vehicle body structure has a risk of being unable to protect the high-voltage cable from an impact when the impact is applied to the driving device from behind during a rear-end collision of the vehicle, because it does not have a structure that protects the high-voltage cable from an impact load.

The present invention is made in view of the circumstances as described above and has an object to provide a support structure of a driving device that can protect a wire harness from an impact during a rear-end collision of a vehicle.

### [Solution to Problem]

The present invention provides a support structure of a driving device, the support structure including: a driving device having a rotating electric machine, and an electric power control device that controls electric power that is supplied to the rotating electric machine, the driving device being disposed below a floor panel of a vehicle; a wire harness that is connected to a connecting portion of the driving device; a side member that extends in a front-rear direction of the vehicle; and a mount bracket that extends in a vehicle width direction and connects the side member and the driving device, the wire harness having a front side harness portion that extends from a position more forward than the driving device toward the driving device, and a bending portion that bends from a rear end portion of the front side harness portion toward the driving device and extends in the vehicle width direction, with a rear end portion being connected to the connecting portion, the bending portion being disposed more rearward than the connecting portion, the support structure being characterized in that the mount bracket is disposed so that a rear end portion of the mount bracket is positioned more rearward than the connecting portion, and the bending portion is disposed above the mount bracket and more forward than the rear end portion of the mount bracket.

### [Advantageous Effects of Invention]

As above, according to the present invention described above, it is possible to protect the wire harness from an impact during a rear-end collision of the vehicle.

### [Brief Description of Drawings]

[Figure 1] Figure 1 is a view showing a support structure of a driving device according to one embodiment of the present invention, which is a bottom view of a rear portion of a vehicle.
[Figure 2] Figure 2 is a view showing the support structure of the driving device according to one embodiment of the present invention, which is a left side view of the driving device.
[Figure 3] Figure 3 is a view showing the support structure of the driving device according to one embodiment of the present invention, which is a top view of the driving device and the mount bracket.

### [Description of Embodiment]

A support structure of a driving device according to one embodiment of the present invention is a support structure of a driving device, the support structure including: a driving device having a rotating electric machine, and an electric power control device that controls electric power that is supplied to the rotating electric machine, the driving device being disposed below a floor panel of a vehicle; a wire harness that is connected to a connecting portion of the driving device; a side member that extends in a front-rear direction of the vehicle; and a mount bracket that extends in a vehicle width direction and connects the side member and the driving device, the wire harness having a front side harness portion that extends from a position more forward than the driving device toward the driving device, and a bending portion that bends from a rear end portion of the front side harness portion toward the driving device and extends in the vehicle width direction, with a rear end portion being connected to the connecting portion, the bending portion being disposed more rearward than the connecting portion, wherein the mount bracket is disposed so that a rear end portion of the mount bracket is positioned more rearward than the connecting portion, and the bending portion is disposed above the mount bracket and more forward than the rear end portion of the mount bracket.

Accordingly, the support structure of a driving device according to one embodiment of the present invention can protect the wire harness from an impact during a rear-end collision of the vehicle.

### [Embodiment]

Hereinafter, a support structure of a driving device according to one embodiment of the present invention will be described by using the drawings.

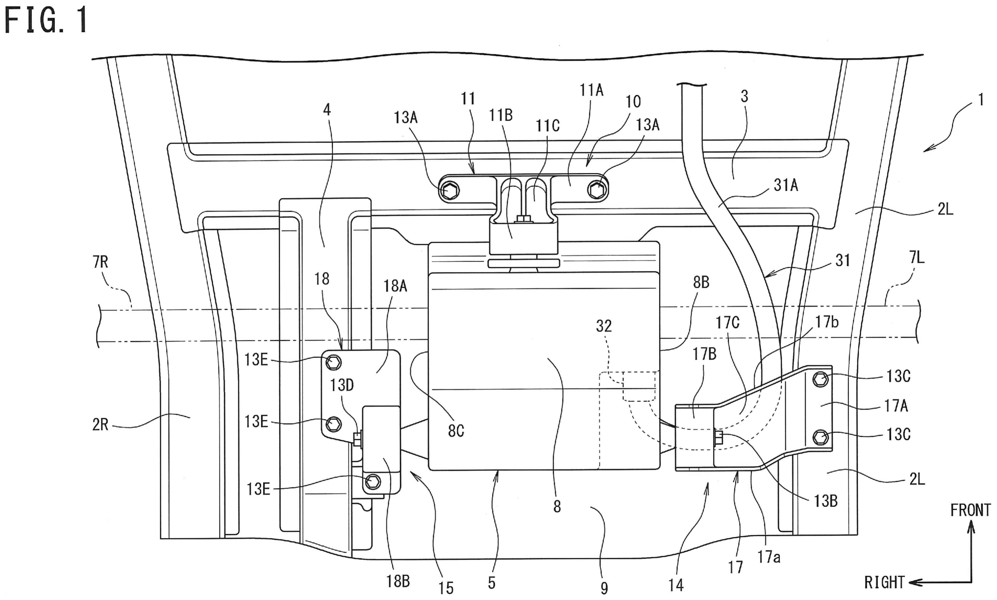

Figure 1 to Figure 3 are views showing the support structure of the driving device according to one embodiment of the present invention.

First, a configuration will be described.

In Figure 1 to Figure 3, up-down, front-rear, and left-right directions are based on the driving device in a state of being disposed in a vehicle, a front-rear direction of the vehicle is defined as a front-rear direction, a left-right direction (vehicle width direction) of the vehicle is defined as a left-right direction, and an up-down direction (height direction) of the vehicle is defined as an up-down direction.

As shown in Figure 1, a vehicle 1 includes a left side member 2L, a right side member 2R, a cross member 3, and a sub-side member 4. The left side member 2L of the present embodiment configures a side member.

The left side member 2L and the right side member 2R are disposed to be spaced apart in the vehicle width direction and extend in the front-rear direction. The vehicle width direction is the left-right direction.

The cross member 3 extends in the vehicle width direction, and left and right end portions thereof are connected to the left side member 2L and the right side member 2R. In the sub-side member 4, a front end portion is connected to the cross member 3, and a rear end portion is connected to a cross member on a rear side not illustrated.

The driving device 5 is disposed in a space surrounded by the left side member 2L, the sub-side member 4, and the cross member 3.

Specifically, the driving device 5 is disposed between the left side member 2L and the sub-side member 4 in the vehicle width direction and is disposed behind the cross member 3 in the front-rear direction. That is, the cross member 3 is disposed in front of the driving device 5.

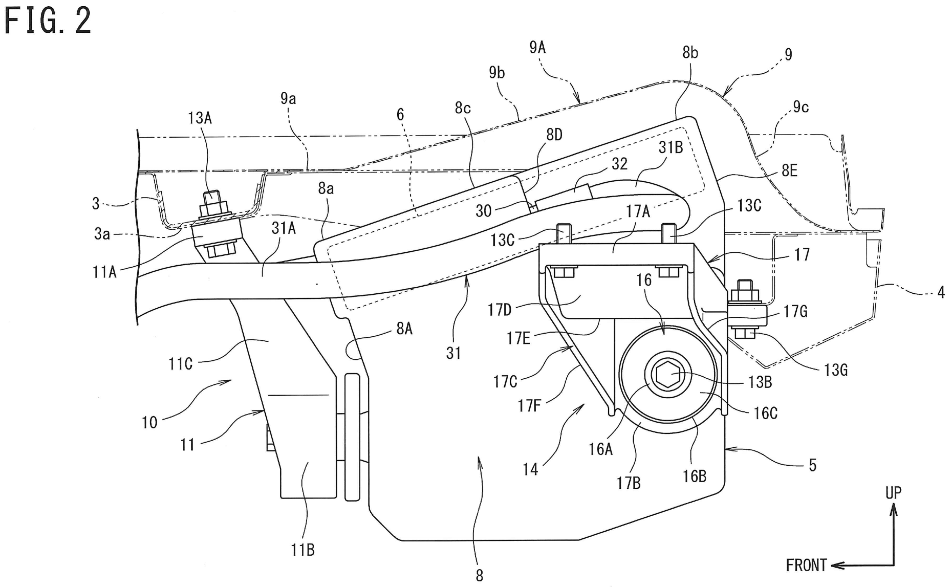

The driving device 5 has a motor generator not illustrated as a rotating electric machine, an inverter 6 (see Figure 2) as an electric power control device that is provided above the motor generator and controls electric power that is supplied to the motor generator, a speed reducer not illustrated that reduces driving power (rotational speed) of the motor generator, and a differential device not illustrated that transmits the power of the speed reducer to left and right rear wheels not illustrated via a left drive shaft 7L and a right drive shaft 7R.

The motor generator, the inverter 6, the speed reducer, and the differential device are accommodated in a driving case 8. The driving case 8 of the present embodiment configures a case.

The motor generator has a function as an electric motor that drives by electric power supplied from a high voltage battery not illustrated via the inverter 6, and a function as a generator that performs power generation by reverse driving power inputted from the differential device.

The inverter 6 converts DC electric power supplied from the high voltage battery into AC electric power of three phases to supply the AC electric power of three phases to the motor generator, and converts the AC electric power of three phases generated by the motor generator into DC electric power to charge the high voltage battery with it. The high voltage battery is composed of, for example, a secondary cell such as a lithium-ion battery.

As shown in Figure 2, the inverter 6 is disposed at an uppermost position of the driving case 8 to be positioned more upward than the motor generator, the speed reducer, and the differential device, and extends from an upper front end portion 8a to an upper rear end portion 8b in a space of an upper portion of the driving case 8.

As shown in Figure 2, the driving device 5 is disposed below a floor panel 9, and is positioned at a rear portion of the vehicle 1. At a front portion of the vehicle 1, a driving source, and left and right driving shafts and left and right front wheels to which power of the driving source is transmitted, all of which are not illustrated, are disposed.

The vehicle 1 of the present embodiment travels in a two-wheel drive mode when only the driving source on the front side is driven, and travels in a four-wheel drive mode when both the driving source and the driving device 5 are driven. The driving source on the front side is not particularly limited.

The driving device 5 is elastically supported at the cross member 3 by a front side mount device 10. The front side mount device 10 has a mount bracket 11. The mount bracket 11 has a member attaching portion 11A that extends in the vehicle width direction and is fastened (connected) to a lower surface 3a of the cross member 3 by bolts 13A, an annular portion 11B that accommodates a cylindrical mount bush not illustrated that is connected to a front wall 8A of the driving case 8, and a connection portion 11C that connects the annular portion 11B and the member attaching portion 11A.

As shown in Figure 1, a left mount device 14 and a right mount device 15 are attached to the driving device 5, and the driving device 5 is elastically supported at the left side member 2L and the sub-side member 4 by the left mount device 14 and the right mount device 15.

As shown in Figure 2, the left mount device 14 has a cylindrical mount bush 16 and a mount bracket 17. The mount bracket 17 of the present embodiment configures a left mount bracket.

The mount bush 16 includes an inner cylinder 16A in which a central axis extends in the vehicle width direction, an outer cylinder 16B that is provided outward in a radial direction of the inner cylinder 16A, with a central axis extending in the vehicle width direction, and a mount rubber 16C that is provided between the inner cylinder 16A and the outer cylinder 16B in the radial direction, and connects the inner cylinder 16A and the outer cylinder 16B, and is formed into a cylindrical shape as a whole.

The inner cylinder 16A is fastened (connected) to a left side wall 8B of the driving case 8 by a bolt 13B, and the mount bush 16 is disposed so that a central axis extends in the vehicle width direction.

As shown in Figure 1, the mount bracket 17 has a member attaching portion 17A that is fastened (connected) to a lower surface of the left side member 2L by bolts 13C (see Figure 1), an annular portion 17B in which the mount bush 16 is accommodated, and a connection portion 17C that connects the annular portion 17B and the member attaching portion 17A.

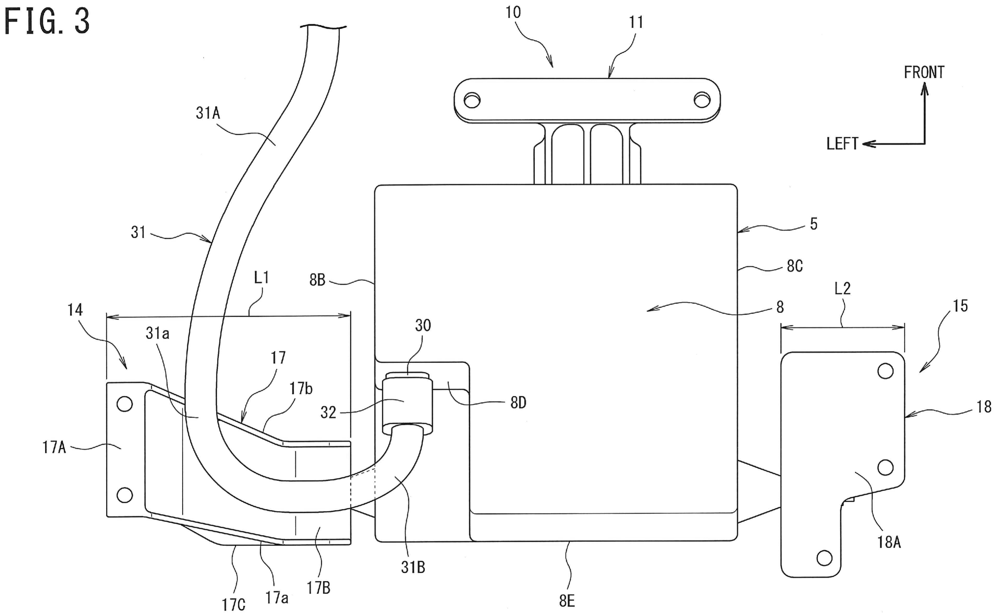

As shown in Figure 1 and Figure 3, the right mount device 15 has a mount bracket 18. The mount bracket 18 has a member attaching portion 18A that is fastened to a lower surface of the sub-side member 4 by bolts 13E (see Figure 1), and an annular portion 18B in which a cylindrical mount bush not illustrated and including a mount rubber is accommodated, and the member attaching portion 18A is positioned more upward than the annular portion 18B.

The mount bracket 18 of the present embodiment configures a right mount bracket. The mount bush of the right mount device 15 is connected to a right side wall 8C of the driving case 8 by a bolt 13D.

In the front side mount device 10, the left mount device 14, and the right mount device 15, the annular portions 11B, 17B, and 18B are positioned at lowermost positions.

In other words, the driving device 5 is elastically supported by the left side member 2L, the sub-side member 4, and the cross member 3 in such a manner as to be suspended from the left side member 2L, the sub-side member 4, and the cross member 3 by the front side mount device 10, the left mount device 14, and the right mount device 15.

As shown in Figure 2, the driving device 5 is disposed in a forward inclined state so that the upper front end portion 8a of the driving case 8 is positioned more downward than the lower surface 3a of the cross member 3, and the upper rear end portion 8b is positioned more upward than the lower surface 3a of the cross member 3.

In other words, the driving device 5 is disposed in a forward inclined state so that the upper front end portion 8a of the driving case 8 is positioned more downward than the upper rear end portion 8b.

A bulged portion 9A is formed at the floor panel 9, and the bulged portion 9A bulges upward from a horizontal portion 9a of the floor panel 9.

The bulged portion 9A has an inclined portion 9b and a rear wall portion 9c. The inclined portion 9b faces the upper surface 8c of the driving case 8 in the up-down direction, and inclines upward from a front end portion to a rear end portion. That is, a gap is formed between the inclined portion 9b and the upper surface 8c of the driving case 8.

Since the driving device 5 is disposed in a forward inclined state, the driving device 5 enters a vehicle interior from the horizontal portion 9a of the floor panel 9. Accordingly, it is possible to prevent a dimension in the up-down direction of the vehicle 1 from increasing and reduce the size of the vehicle 1.

As shown in Figure 3, a length L1 in the vehicle width direction of the mount bracket 17 is formed to be longer than a length L2 in the vehicle width direction of the mount bracket 18. That is, the length L1 in the vehicle width direction of the mount bracket 17 including the member attaching portion 17A, the connection portion 17C, and the annular portion 17B is formed to be longer than the length L2 in the vehicle width direction of the mount bracket 18 including the member attaching portion 18A and the annular portion 18B.

An upper portion of a left rear wall 8D of the driving device 5 is disposed more forward than an upper portion of a right rear wall 8E, and a wire harness 31 is connected to the left rear wall 8D.

The wire harness 31 has a front side harness portion 31A, and a bending portion 31B. The front side harness portion 31A extends from a position more forward than the driving device 5 toward the driving device 5, and a front end portion is connected to the high-voltage battery.

The bending portion 31B bends from a rear end portion 31a of the front side harness portion 31A toward the driving device 5 and extends in the vehicle width direction, and a connector 32 provided at a rear end portion is connected to a connector 30 provided at the left rear wall 8D.

The bending portion 31B is disposed more rearward than the connector 30, and the bending portion 31B bends forward toward the connector 30 after bending from the rear end portion 31a of the front side harness portion 31A and extending in the vehicle width direction.

The connector 30 is electrically connected to the inverter 6, and the inverter 6 and the high-voltage battery are electrically connected via the wire harness 31. The connector 30 of the present embodiment configures a connecting portion.

The mount bracket 17 is disposed so that a rear end portion 17a is positioned more rearward than the connector 30.

As shown in Figure 3, the bending portion 31B is disposed above the mount bracket 17, and more forward than the rear end portion 17a of the mount bracket 17, and is disposed between a front end portion 17b and the rear end portion 17a of the mount bracket 17 in the front-rear direction.

The mount bracket 17 extends in the vehicle width direction along the bending portion 31B, and the bending portion 31B bends toward the driving device 5 from the rear end portion 31a of the front side harness portion 31A and extends in the vehicle width direction above the connection portion 17C.

Next, an effect of the support structure of the driving device 5 of the present embodiment will be described. The support structure of the driving device 5 of the present embodiment includes: the driving device 5 that has the motor generator, and the inverter 6 that controls electric power that is supplied to the motor generator, the driving device 5 being disposed below the floor panel 9 of the vehicle 1; the wire harness 31 that is connected to the connector 30 of the driving device 5; the left side member 2L that extends in the front-rear direction; and the mount bracket 17 that extends in the vehicle width direction and connects the left side member 2L and the driving device 5.

The wire harness 31 has the front side harness portion 31A that extends from a position more forward than the driving device 5 toward the driving device 5, and the bending portion 31B that bends toward the driving device 5 from the rear end portion 31a of the front side harness portion 31A and extends in the vehicle width direction, with the connector 32 provided at the rear end portion being connected to the connector 30, and the bending portion 31B is disposed more rearward than the connector 30.

The mount bracket 17 is disposed so that the rear end portion 17a is positioned more rearward than the connector 30, and the bending portion 31B is disposed above the mount bracket 17, and more forward than the rear end portion 17a of the mount bracket 17.

Accordingly, when the vehicle body member that is disposed behind the driving device 5 moves to a front side during a rear-end collision of the vehicle 1, it is possible to collide the vehicle body member with the mount bracket 17 before the vehicle body member collides with the bending portion 31B. For this reason, it is possible to protect the bending portion 31B from an impact, and it is possible to protect the wire harness 31 from the impact.

Furthermore, since the rear end portion 17a of the mount bracket 17 is disposed to be positioned more rearward than the connector 30, it is possible to protect the connector 30 from the impact.

Furthermore, since the driving device 5 and the wire harness 31 are disposed below the floor panel 9, it is possible to collide foreign objects such as flying stones with the mount bracket 17 during travel of the vehicle 1, and it is possible to restrain the foreign objects from colliding with the bending portion 31B. As a result, it is possible to protect the bending portion 31B from the foreign objects.

Furthermore, according to the support structure of the driving device 5 of the present embodiment, the bending portion 31B is disposed between the front end portion 17b and the rear end portion 17a of the mount bracket 17 in the front-rear direction.

Accordingly, it is possible to cover a wide range below the bending portion 31B with the mount bracket 17, and it is possible to more effectively restrain foreign objects such as flying stones from colliding with the bending portion 31B during travel of the vehicle 1. As a result, it is possible to more effectively protect the bending portion 31B from the foreign objects.

Furthermore, according to the support structure of the driving device 5 of the present embodiment, the mount bracket 17 extends in the vehicle width direction along the bending portion 31B.

Here, it is desirable that the wire harness 31 that connects the high-voltage battery and the driving device 5 is arranged close to the driving device 5 beside the driving device 5 in order to increase ease of arrangement, but when the connector 30 is disposed at the left rear wall 8D of the driving case 8, it is necessary to arrange the wire harness by bending the wire harness 31 in the vicinity of the connector 30.

When a gap in the vehicle width direction between the mount bracket 17 and the driving device 5 is small, it is necessary to reduce a bending radius of the bending portion 31B of the wire harness 31, and an excessive load is applied to the bending portion 31B.

According to the support structure of the driving device 5 of the present embodiment, since the mount bracket 17 is extended in the vehicle width direction along the bending portion 31B, it is possible to ensure a large space in the vehicle width direction above the connection portion 17C.

By disposing the bending portion 31B of the wire harness 31 in this space, it is possible to increase the bending radius of the bending portion 31B, and it is possible to prevent an excessive load from being applied to the wire harness 31.

Note that the left mount device 14 and the right mount device 15 of the present embodiment may be interchanged in the left-right direction, the mount device having the same shape as the left mount device 14 may be used as a right mount device, and the bending portion 31B may be disposed above the right mount device 15.

Although the embodiment of the present invention is disclosed, it is apparent that modifications can be added by those skilled in the art without departing from the scope of the present invention. It is intended that all such modifications and equivalents are included in the following claims.

### [Reference Signs List]

1... vehicle, 2L...left side member (side member), 2R...right side member, 6...inverter (electric power control device), 17...mount bracket, 17a...rear end portion (rear end portion of mount bracket), 17b...front end portion (front end portion of mount bracket), 30...connector (connecting portion), 31...wire harness, 31A...front side harness portion, 31a...rear end portion (rear end portion of front side harness portion), 31B...bending portion, 32... connector (rear end portion of bending portion)

## Claims

1. A support structure of a driving device, the support structure comprising:
a driving device (5) having a rotating electric machine, and an electric power control device (6) that controls electric power that is supplied to the rotating electric machine, the driving device (5) being disposed below a floor panel (9) of a vehicle (1);
a wire harness (31) that is connected to a connecting portion (30) of the driving device (5);
a side member (2L) that extends in a front-rear direction of the vehicle (1); and
a mount bracket (17) that extends in a vehicle width direction and connects the side member (2L) and the driving device (5),
the wire harness (31) having
a front side harness portion (31A) that extends from a position more forward than the driving device (5) toward the driving device (5), and a bending portion (31B) that bends from a rear end portion (31a) of the front side harness portion (31A) toward the driving device (5) and extends in the vehicle width direction, with a rear end portion (32) being connected to the connecting portion (30), the bending portion (31B) being disposed more rearward than the connecting portion (30),
the support structure being **characterized in that**
the mount bracket (17) is disposed so that a rear end portion (17a) of the mount bracket (17) is positioned more rearward than the connecting portion (30), and
the bending portion (31B) is disposed above the mount bracket (17) and more forward than the rear end portion (17a) of the mount bracket (17).

2. The support structure of a driving device as claimed in claim 1, wherein the bending portion (31B) is disposed between a front end portion (17b) and the rear end portion (17a) of the mount bracket (17) in the front-rear direction.

3. The support structure of a driving device as claimed in claim 1 or claim 2, wherein the mount bracket (17) extends in the vehicle width direction along the bending portion (31B).
